# EUROPEAN PATENT APPLICATION

(11) **EP 2 177 105 A2**
(43) Date of publication of application: **21.04.2010**
(21) Application number: 10075045.4
(22) Date of filing: 28.09.2006
(51) Int. Cl.: A01K 5/02

(54) **An assembly of a milking robot with a milking robot feeding place, such as a milking robot feed trough, and a device for gripping and displacing material, such as for example roughage and/or concentrate for animals**

(30) Priority: 03.10.2005 NL 1030090
(62) Divisional of application: 06799475.6
(71) Applicant: Maasland N.V., 3147 PA Maassluis (NL)
(72) Inventor: Van den Berg, Karel, 2971 VB Blekengraaf (NL); Bos, Gregorius Rodulphius, 8701 KM Bolsward (NL)
(74) Representative: Corten, Maurice Jean F.M.

(57) **Abstract**

An assembly of a milking robot with a milking robot feeding place, such as a milking robot feed trough, and a device for gripping and displacing material, such as for example roughage and/or concentrate for animals. The device is provided with a gripper (2) for gripping, then displacing and subsequently supplying the material. The device comprises control means for displacing the gripper (2) to the milking robot and for controlling the gripper for supplying the material to the milking robot feeding place of the milking robot.

## Description

The invention relates to an assembly of a feeding place and a device for gripping and displacing material, such as for example roughage and/or concentrate for animals, which device is provided with a gripper for gripping, then displacing and subsequently supplying the material as claimed in claim 1.

The milking robot feeding place is preferably provided with contents determining means for determining the weight and/or the volume of the material present in the milking robot feeding place and for supplying a weight signal and/or a quantity signal, respectively to the control means. This makes it possible to supply material in accurately metered portions to the milking robot feeding place. The assembly is preferably provided with a separate feeding place that is located remotely from the milking robot, for example a feed alley, the control means being suitable for displacing the gripper to the feeding place and for controlling the gripper for supplying the material to the feeding place.

The assembly is preferably provided with a cleaning device for cleaning the gripper. This makes it possible to improve the hygiene of the assembly.

An automatic cleaning can be obtained if, in an embodiment of an assembly according to the invention, the gripper is movable by the control means towards the cleaning device, the cleaning device being automatically activated by the control means when the gripper is present at the cleaning device.

Although the gripper is capable of gripping and displacing already mixed material, material can be mixed as desired in an embodiment of an assembly according to the invention in which the assembly is provided with a stationary mixing device for mixing material, the control means being suitable for displacing the gripper to the mixing device and for controlling the gripper for supplying the material to the mixing device, and the control means being suitable for controlling the gripper for gripping material mixed by the mixing device and for displacing the mixed material to a feeding place. The mixing device preferably comprises a self-emptying, rotatable drum.

If a feeding place comprises several feed troughs, each feed trough can be filled with an individual sort of material, for example concentrate, respectively roughage.

In a preferred embodiment of an assembly according to the invention, the assembly is provided with a display screen, and the gripper is provided with a camera for recording images, the recorded images being displayable on the display screen. This makes it possible to inspect the stable or the area within which the gripper can be displaced. The images can be examined by a farmer or automatically be analysed, it being possible to alarm the farmer in case of abnormalities.

In particular if the assembly is provided with a milking robot for automatically connecting a teat cup to a teat of an animal, it is possible to determine by means of said milking robot how many animals will make use of the milking robot within a particular period of time.

In a preferred embodiment of an assembly according to the invention, the camera is provided with a microphone for recording sounds, and the display screen is provided with a loudspeaker for reproducing the recorded sounds.

For inspecting the stable in a simple manner, it is advantageous if the assembly is provided with a comparing device for comparing the recorded images with reference images and for supplying a comparison signal. The assembly is preferably provided with a comparing device for comparing the recorded sounds with reference sounds and for supplying a comparison signal. In particular if the assembly is provided with an alarm signal producing device for supplying an alarm signal with the aid of the comparison signal, it is possible to draw the farmer's attention to deviating situations.

The alarm signal can also be used to control a device directly, i.e. without intervention of the farmer. It is in particular advantageous that, if the comparison signal indicates that few animals are present at the milking robot, the alarm signal actuates such a device that activates animals to go to the milking robot. If the assembly comprises cubicles for animals, it is advantageous if the comparing device is suitable for supplying a comparison signal that is indicative of whether or not a cubicle is occupied, and that the alarm signal comprises an alarm device for waking up animals that are sleeping in the cubicles. Animals can be actively driven from the cubicles if the assembly comprises a driving-out device for driving animals from the cubicles with the aid of the alarm signal. It is further advantageous if the assembly comprises a driving device for driving animals to the milking robot. The driving device is preferably integrated with the gripper.

In order to prevent that during transport or lifting of the gripper material parts fall unintentionally from the gripper, in an embodiment of an assembly according to the invention, the device comprises control means with a control element by means of which, after the material has been gripped by means of the gripper, a collecting element is capable of being brought from an inactive position into a further position in which the collecting element is able to collect material that is unintentionally lost by the gripper. According to a further inventive feature, after the collecting element has been brought into the further position by means of the operating element, the collecting element of the collecting device is located remotely from the lower side of the gripper. In this manner the collecting element acts as a passive element during gripping the material and as an active collecting element after gripping the material. According to again another inventive feature, after the collecting element has been brought into the inactive position by means of the operating element, the collecting element is located beside the gripper. In this manner the gripper is not impeded by the collecting element during gripping the material. According to a further embodiment according to the invention, after the collecting element has been brought into the inactive position by means of the control element, the collecting element is located at the same level as or above the lower side of the gripper. In a preferred embodiment according to the invention, the collecting element is located in its inactive position at a higher level than the upper side of the gripper. In order to enable in a simple manner the material collected by the collecting element to leave the collecting element during emptying the gripper, there is provided, preferably at one side of the collecting element, an aperture via which the material collected can leave the collecting element. In order to grip the material to be gripped as uniformly as possible from the storage place and/or to drop it as uniformly as possible at the destination, the device comprises a sensor with the aid of which the distribution and/or the level and/or the difference in level of the material to be gripped and/or already dropped are/is determined. According to a further inventive feature, the sensor is disposed on the device and/or is arranged beside the material to be gripped and/or at the place where the material is dropped. According to a further inventive feature, the control means are actuated automatically by means of the signals supplied by the aforementioned sensor. In this manner the device is capable of working fully autonomously, without the supervision of an operator. According to a further inventive feature, the device is controlled in such a way that, if the material to be gripped is located at different levels, the material located at the highest or almost the highest level will always be the first to be gripped and/or the material will be dropped at that place where the level is the lowest or almost the lowest. In order to be able to displace the material to be gripped in vertical direction, according to a further inventive feature, the gripper is connected with an accordion-like hingeable arm construction. According to again another inventive feature, the gripper is fastened on a displaceable suspension structure. The other side of the accordion-like hingeable arm construction is preferably connected with the suspension device for the gripper. According to again another inventive feature, the material can be displaced along a rail along which the suspension device is displaceable. According to again another embodiment, the device is disposed on an autonomous vehicle. The latter embodiment has the advantage that the material can be displaced via a route to be determined arbitrarily. In a preferred embodiment according to the invention, the collecting device is preferably fitted to the suspension device in a way in which it is rotatable about a horizontal pivot axis. According to a further inventive feature, the device comprises a feeding column provided with one or more feed troughs and with a chute hopper for dropping the material gripped by the gripper. According to a further inventive feature, the feeding column comprises a metering mechanism for metering, from the chute hopper, the material to be supplied to the feed trough(s). According to again another inventive feature, the device is provided with contents determining means for determining the weight and/or the volume of the material present in the feeding column. According to again another inventive feature, the device comprises an alarm device and/or a make-and-break device that supplies a signal if there is no material and/or hardly any material to be gripped by the gripper. In this manner it is possible that the device is put out of operation temporarily and/or that the attention of an operator is drawn to the fact that there is no material left to be picked up by the device. According to again another inventive feature, the device comprises weighing means with the aid of which the amount of material gripped and/or dropped is determined. According to a further inventive feature, the device comprises material determining means, such as for example a camera with image analysing equipment and/or an odour sensor, with the aid of which it is determined what sort of material is present to be gripped and/or what material has been gripped. With the aid of material determining means it is thus possible, if different sorts of material are present to be gripped, to make a choice from the material sorts. According to again another aspect of the invention, the device comprises material quality determining means, such as for example an odour sensor and/or a colour sensor, with the aid of which the quality of the material gripped and/or to be gripped is determined. With the aid of said material quality determining means it is thus possible to distinguish between material of lower quality and even material that is no longer suitable at all for being gripped and displaced. According to another aspect of the invention, the device is provided with protecting means that protect human beings and/or animals against coming unintentionally into contact with and/or being injured by the device during operation. According to a further inventive feature, the protecting means comprise a protective bracket that is preferably provided with a sensor that supplies a signal when a human being and/or an animal comes into contact with said protective bracket. According to again another inventive feature, the control means of the device are actuated by means of the sensor signal. In a preferred embodiment according to the invention, the sensor is an ultrasonic sensor or an infrared sensor or a camera.

In some cases it is difficult or even impossible to dispose a rail to which the suspension construction can be fastened in a way in which it is displaceable. In order to be able to make use of the gripper also in these cases, in an embodiment of an assembly according to the invention, the rail is provided with an end, the control means are suitable for controlling the autonomous vehicle, the autonomous vehicle is provided with a rail portion along which the suspension device is displaceable, and the control means control the autonomous vehicle and the suspension device in such a way that the suspension device is displaceable from the end of the rail to the rail portion. This means that the gripper is automatically moved from the rail to the autonomous vehicle.

The invention will now be explained in further detail with reference to the accompanying figures, in which:
Figure 1 is a side view of a gripper which is provided, according to the invention, with a collecting device comprising a collecting element for collecting material falling unintentionally from the gripper;
Figure 2 shows the gripper according to Figure 1 when gripping the material to be displaced;
Figure 3 shows the gripper according to Figures 1 and 2 in cooperation with a feeding column that is provided with one or more feed troughs and a chute hopper for dropping the material gripped by the gripper;
Figure 4 is a schematic side view of a gripper that supplies material to a milking robot feeding place;
Figure 5 is a schematic side view of a gripper that supplies material to a mixing device;
Figure 6 is a schematic side view of a gripper that is displaceable from a rail to an autonomous vehicle, and
Figure 7 is a schematic side view of a cleaning device for cleaning a gripper.

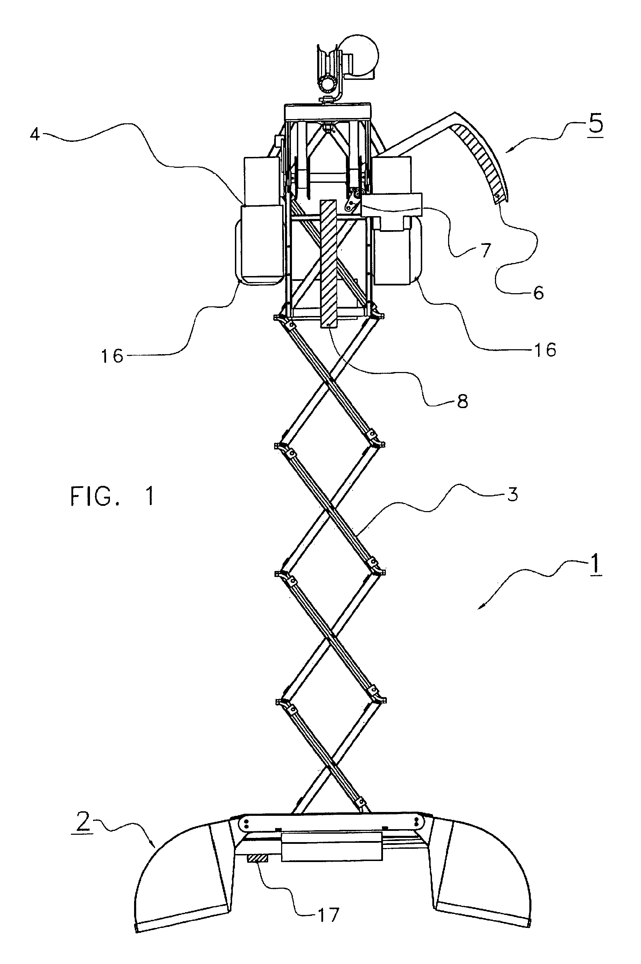

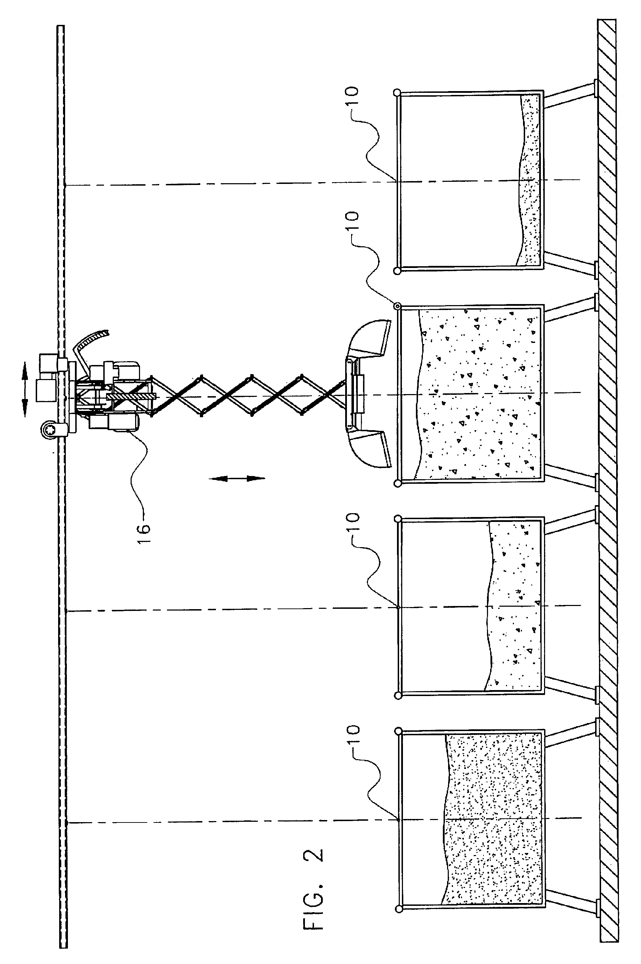

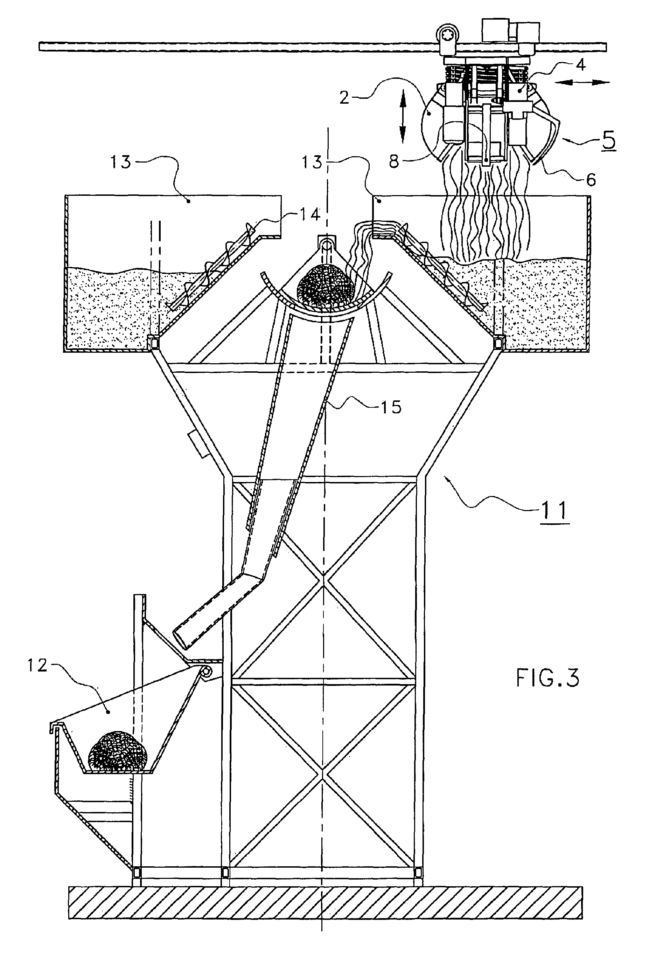

Figure 1 is a side view of a gripping device 1 for gripping and displacing material, such as roughage for animals for example, which device is provided with a gripper 2 designed in the present embodiment as a bucket-gripper. However, it will be obvious that, instead of a bucket-gripper, it will also be possible to apply other suitable gripping elements, such as a fork-gripper for example; the choice of the gripping elements largely depends on the material to be gripped. The gripper 2 is connected with a displaceable suspension device 4 by means of an accordion-like hingeable arm construction 3. The gripping device 1 is further provided with a collecting device 5 comprising a collecting element 6 for collecting material falling unintentionally from the gripper 2. The gripping device 1 is further provided with control means comprising an operating element 7 by means of which, after the material has been gripped by means of the gripper 2, the collecting element 6 is capable of being brought from an inactive position, as shown in Figure 1, into a further position in which the collecting element 6 is able to collect material that is lost unintentionally by the gripper 2. In the present embodiment, the collecting element 6 is in the further position, remotely from the lower side of the gripper 2 which has been retracted as far as the displaceable suspension device 4 by means of the accordion-like hingeable arm construction 3. In the embodiment shown, the collecting element 6 is designed as a receptacle which is preferably provided on one side with an aperture via which the collected material can leave the collecting element 6. As shown in Figures 1 - 3, the gripping device 1 comprises a sensor 8 with the aid of which the distribution and/or the level and/or the difference in level of the material to be gripped and/or already dropped are/is determined. The sensor 8 supplies signals to the control means for the gripping device 1, in such a way that the device is actuated fully automatically without the intervention of an operator. As shown in Figure 2, the displaceable suspension device 4 moves along a rail 9 that is suspended above several feed troughs 10. The feed troughs 10 may contain different sorts of material that are gripped from the feed trough 10 by means of the gripper 2 and are displaced via the rail 9 to the feeding column 11 shown in Figure 3. The feeding column 11 comprises feed troughs 12 from which the animals are able to eat. The feeding column 11 is further provided with chute hoppers 13 for dropping the material gripped by the gripper 2. Each of the chute hoppers 13 is provided with a metering mechanism comprising a loading auger 14. By means of the loading auger 14 material can be dropped from the chute hoppers 13 via a chute 15 into the several feed troughs 12. If material is lost by the gripper 2 during transport of the gripping device 1, this material is collected by the collecting element 6 and is the first to be dropped into the chute hopper 13 by bringing the collecting devices 5 into the inactive position, after which the remaining material is subsequently dropped into the chute hopper 13 by opening the gripper 2. As shown in Figure 1, the gripping device 1 further comprises protecting means 16 that protect human beings and/or animals against coming into contact in a undesirably violent manner with the displaceable suspension device 4. The protecting means 16 are designed in such a way that, when an animal and/or a human being comes into contact with the gripping device 1, the latter is immediately put out of operation and, optionally, a warning is sent to a supervisor. The gripping device 1 is further provided with (non-shown) weighing means, with the aid of which the amount of material gripped and/or dropped is determined. As shown in Figure 1, the gripper 2 comprises material quality determining means 17, such as for example an odour sensor and/or a colour sensor, with the aid of which the quality of the material gripped and/or to be gripped is determined.

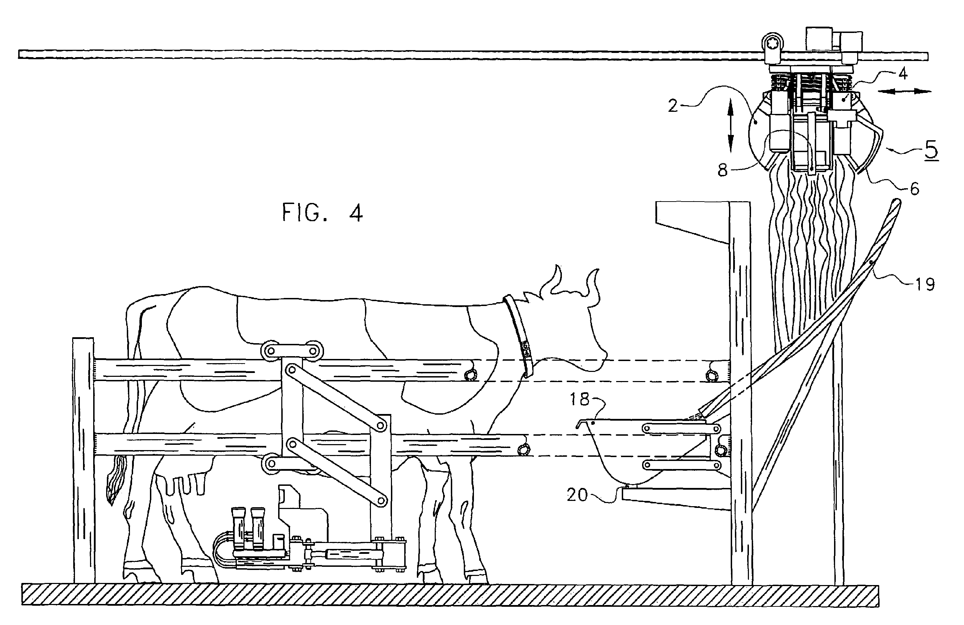

Figure 4 shows schematically an assembly according to the invention in which the gripper 2 supplies for example feed to a milking robot feeding place, such as a feed trough 18. A milking robot for automatically connecting a teat cup to a teat of an animal is known per se and will not be described here in further detail for the sake of simplicity of the description. A channel-shaped chute 19 shown schematically ensures that the feed will get into the feed trough 18. The feed trough 18 is provided with contents determining means 20 for determining the weight and/or the volume of the material present in the feed trough 18 and for supplying a weight signal and/or a quantity signal, respectively to the control means. This makes it possible to supply material in accurately metered portions to the feed trough 18. It will be obvious that, remotely from the milking robot, there may be separate feeding places, such as for example a feed alley, the control means being suitable for displacing the gripper to the feeding place and for controlling the gripper for supplying the material to the feeding place. Analogously to the feed trough 18, these separate feeding places may be provided with contents determining means for determining the weight and/or the volume of the material present in the feeding place and for supplying a weight signal and/or a quantity signal, respectively to the control means. This makes it possible to design these separate feeding places as smaller ones than the known feeding places that are oversized in order to ensure the presence of enough feed. According to the invention, when the feed troughs get empty, it is possible to supply a control signal to the gripper for the purpose of replenishing the feeding places.

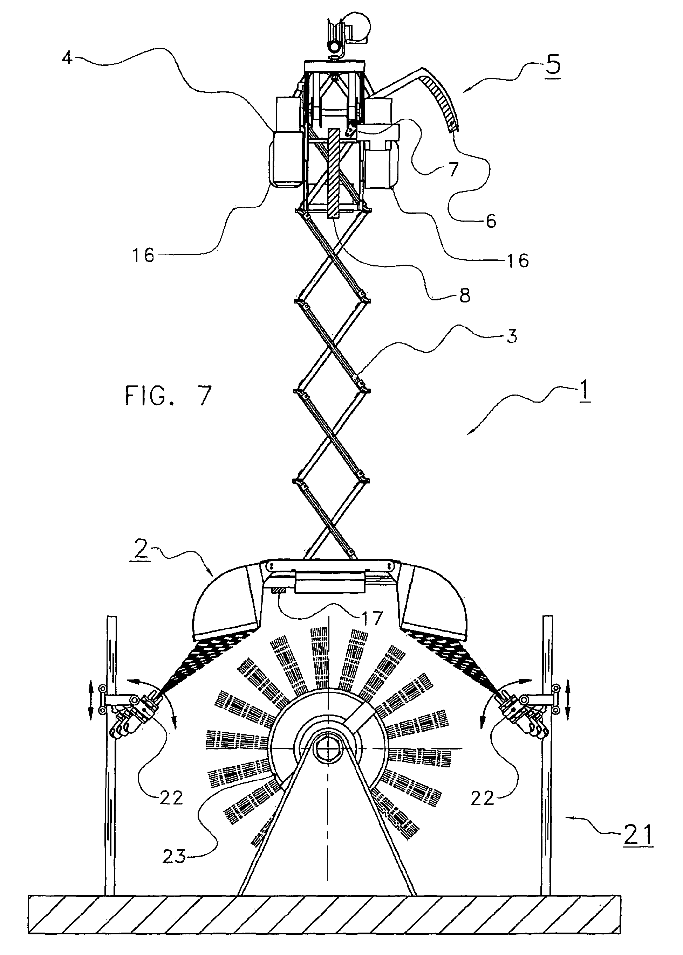

Frequent use of the gripper may lead to contamination of the gripper 2. As shown in Figure 7, an assembly according to the invention is provided with a cleaning device 21 that comprises, in the embodiment shown, two sprayers 22 and a brush 23, for cleaning the gripper 2. An automatic cleaning can be obtained if, in an embodiment of an assembly according to the invention, the gripper is movable by the control means towards the cleaning device, the cleaning device 21 being automatically activated by the control means when the gripper 2 is present at the cleaning device 21, which can be detected in a simple manner by detectors.

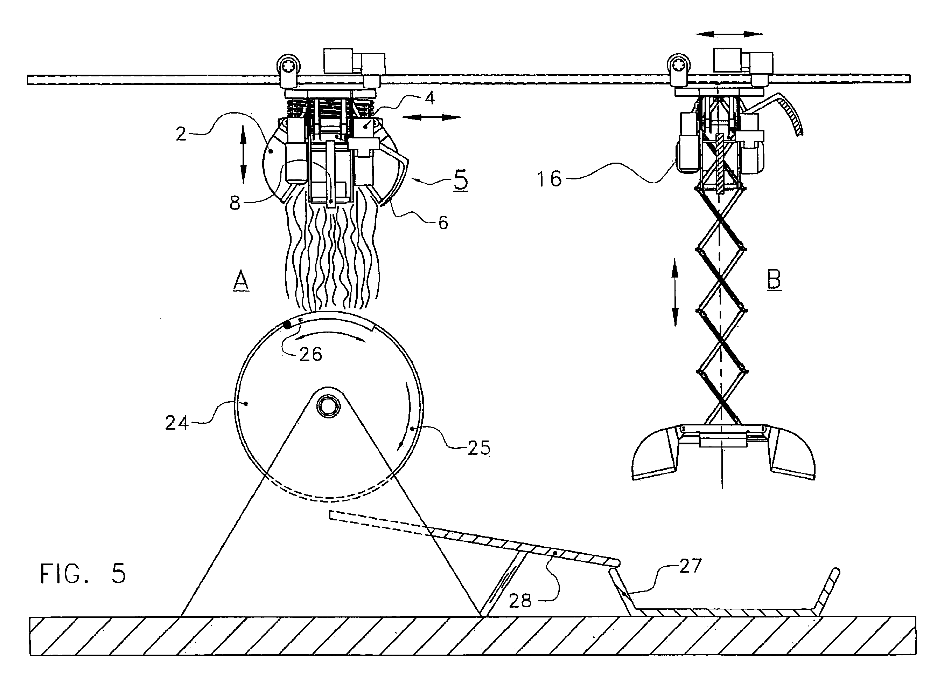

Although the gripper 2 is capable of gripping and displacing already mixed material, material can be mixed as desired in an embodiment of an assembly according to the invention in which the assembly is provided with a stationary mixing device 24 for mixing material, the control means being suitable for displacing the gripper 2 to the mixing device 24 (see Figure 5 position A) and for controlling the gripper 2 for supplying the material to the mixing device 24, and the control means being suitable for controlling the gripper 2 for gripping material mixed by the mixing device 24 (as shown in Figure 5 position B) and for displacing the mixed material to a feeding place. The mixing device 24 preferably comprises a self-emptying, rotatable drum 25. The drum 25 comprises an operable shifting cover 26 in order to make it possible to receive material and to supply mixed material in a simple manner. In the embodiment shown, mixed material is supplied to a receptacle 27 with the aid of a guide means 28.

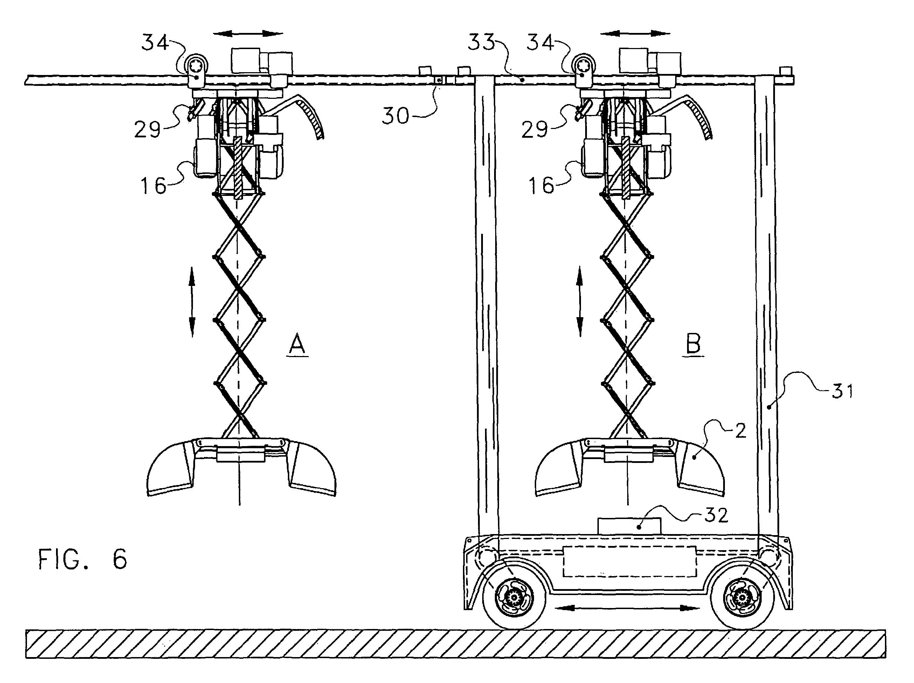

In a preferred embodiment of an assembly according to the invention, the assembly is provided with a (non-shown) display screen, and the gripper 2 is provided with a camera 29 (Figure 6) for recording images, the recorded images being displayable on the display screen. This makes it possible to inspect the stable or the area within which the gripper 2 can be displaced. The images can be examined by a farmer or automatically be analysed, it being possible to alarm the farmer in case of abnormalities. In particular if the assembly is provided with a milking robot for automatically connecting a teat cup to a teat of an animal, it is possible to determine by means of said milking robot how many animals will make use of the milking robot within a particular period of time. In a preferred embodiment of an assembly according to the invention, the camera is provided with a (non-shown) microphone for recording sounds, and the display screen is provided with a loudspeaker for reproducing the recorded sounds.

For inspecting the stable in a simple manner, it is advantageous if the assembly is provided with a comparing device for comparing the recorded images with reference images and for supplying a comparison signal. The assembly is preferably provided with a comparing device for comparing the recorded sounds with reference sounds and for supplying a comparison signal. In particular if the assembly is provided with an alarm signal producing device for supplying an alarm signal with the aid of the comparison signal, it is possible to draw the farmer's attention to deviating situations.

The alarm signal can also be used to control a device directly, i.e. without intervention of the farmer. It is in particular advantageous that, if the comparison signal indicates that few animals are present at the milking robot, the alarm signal actuates such a device that activates animals to go to the milking robot. If the assembly comprises cubicles for animals, it is advantageous if the comparing device is suitable for supplying a comparison signal that is indicative of whether or not a cubicle is occupied, and that the alarm signal comprises an alarm device for waking up animals that are sleeping in the cubicles. Animals can be actively driven from the cubicles if the assembly comprises a driving-out device for driving animals from the cubicles with the aid of the alarm signal. It is further advantageous if the assembly comprises a driving device for driving animals to the milking robot. The driving device is preferably integrated with the gripper. In some cases it is difficult or even impossible to dispose a rail to which the suspension construction can be fastened in a way in which it is displaceable. In order to be able to make use of the gripper also in these cases, in an embodiment of an assembly according to the invention, as shown in Figure 6, the rail 9 is provided with an end 30, the control means are suitable for controlling an autonomous vehicle 31 with control and navigation means 32, the autonomous vehicle 31 is provided with a rail portion 33 along which a suspension device 34 for the gripper 2 is displaceable, and the control means move the autonomous vehicle 31 and the suspension device 34 in such a way that the suspension device 34 is displaceable from the end 30 of the rail 9 (as shown in Figure 6 position A) to the rail portion 33, as shown in Figure 6 position B. This means that the gripper is automatically moved from the rail to the autonomous vehicle.

## Claims

1. An assembly of a feeding place and a device for gripping and displacing material, which device is provided with a gripper (2) for gripping, then displacing and subsequently supplying the material, **characterized in that** the assembly is provided with a stationary mixing device (24) for mixing material, the control means being suitable for displacing the gripper (2) to the mixing device (24) and for controlling the functioning of the gripper for supplying the material to the mixing device (24), and the control means being suitable for controlling the functioning of the gripper (2) for gripping material mixed by the mixing device (24) and for displacing the mixed material to a feeding place.

2. An assembly as claimed in claim 1, **characterized in that** the assembly is provided with a stationary mixing device (24) for mixing material, the control means being suitable for displacing the gripper (2) to the mixing device (24) and for controlling the gripper for supplying the material to the mixing device (24), and the control means being suitable for controlling the gripper (2) for gripping material mixed by the mixing device (24) and for displacing the mixed material to a feeding place.

3. An assembly as claimed in claim 2, **characterized in that** the mixing device (24) comprises a self-emptying, rotatable drum (25).

4. An assembly as claimed in any one of the preceding claims, **characterized in that** the assembly is provided with a display screen, and **in that** the gripper (2) is provided with a camera (29) for recording images, the recorded images being displayable on the display screen.

5. An assembly as claimed in claim 4, **characterized in that** the assembly is provided with a milking robot for automatically connecting a teat cup to a teat of an animal.

6. An assembly as claimed in claim 4 or 5, **characterized in that** the assembly is provided with a comparing device for comparing the recorded images with reference images and for supplying a comparison signal.

7. An assembly as claimed in any one of the preceding claims, **characterized in that** the device is provided with a collecting device (5) comprising a collecting element (6) for collecting material falling unintentionally from the gripper (2), and an operating element (7) by means of which, after the material has been gripped by means of the gripper (2), the collecting element (6) is capable of being brought from an inactive position into a further position in which the collecting element (6) is able to collect material that is unintentionally lost by the gripper (2).

8. An assembly as claimed in claim 7, **characterized in that** the collecting element (6) is designed as a receptacle which is preferably provided at one side with an aperture via which the collected material can leave the collecting element (6).

9. An assembly as claimed in any one of the preceding claims, **characterized in that** the device comprises a sensor (8) with the aid of which the distribution and/or the level and/or the difference in level of the material to be gripped and/or already dropped are/is determined, and which is preferably disposed on the gripper (2) and/or arranged beside the material to be gripped and/or at the place where the material is dropped.

10. An assembly as claimed in any one of the preceding claims, **characterized in that** the device comprises weighing means with the aid of which the amount of material gripped and/or dropped is determined.

11. An assembly as claimed in any one of the preceding claims, **characterized in that** the device comprises material determining means, such as for example a camera with image analysing equipment and/or an odour sensor, with the aid of which it is determined what sort of material is present to be gripped and/or what material has been gripped.

12. An assembly as claimed in any one of the preceding claims, **characterized in that** the device comprises material quality determining means (17), such as for example an odour sensor and/or a colour sensor, with the aid of which the quality of the material gripped and/or to be gripped is determined.
